# EUROPEAN PATENT SPECIFICATION

(11) **EP 1 858 727 B1**
(45) Date of publication and mention of the grant of the patent: **03.12.2008**
(21) Application number: 06717006.8
(22) Date of filing: 14.03.2006
(51) Int. Cl.: B60P 7/08

(54) **LOAD LASHING DEVICE**
LADEVERZURRVORRICHTUNG
DISPOSITIF D'ARRIMAGE DE CHARGES

(30) Priority: 14.03.2005 SE 0500578
(43) Date of publication of application: 28.11.2007
(73) Proprietor: Qualis AB, 436 22 Askim (SE)
(72) Inventor: LINDBLAD, Lennart, S-447 35 Vårgårda (SE)
(74) Representative: Cederbom, Hans Erik August
(86) International application number: PCT/SE2006/000321
(87) International publication number: WO 2006/098681

(56) References cited:
- WO-A-00/66395
- DE-U1- 9 406 818
- US-A- 3 957 285
- US-A- 4 247 235
- US-A- 5 026 230
- US-A1- 2003 174 055
- US-B1- 6 357 978

## Description

The present invention relates to a goods lashing device to enable control of the tightening and that comprises a mechanism consisting of a number of thin and bent plates, that exhibit spring properties and that are joined with a lashing strap, for tightening the aforementioned lashing strap or other flexible lashing apparatus, and that the aforementioned plates are arranged to straighten during tightening of the lashing strap with required force.

Under the transport of specific types of goods that are lashed with the help of a strap, chain, wire or other lashing apparatus, the applied tightening force on the lashing strap often drops on account of the lashed goods through, for example, vibration or heavy seas becoming more compact and thus forming a smaller volume.

Also previously disclosed through, among others, DE 19527065 C2 is an automatic strap adjuster. In that connection a rubber band produces the aforementioned tensioning of the strap. However, no large tightening force can be accomplished using a rubber band, which must be continuously tensioned with greater tightening of the strap.

Furthermore, previously disclosed through US 6357978 B1 is a load meter, where a spring section that interacts with an axle in an eye is arranged in order to indicate the load effect. However the aforementioned load meter does not permit easy reading of the load indicator's compaction.

The device disclosed through US 5026230 A comprises of a compactable spring (119) arranged between two pieces of metal joined to the strap. This disclosed device forms an adjustment device and primarily an indicator.

DE 9406818 U1 shows a force indicator for straps which is formed from a U- or V-shaped spring section (4) and two strap linkage parts (2, 3) and which are preferably enclosed in a common plastic material. When the strap (1) is tensioned the parts stretch out. With that the markings (6) can indicate when the strap tension (1) is good or bad.

US 4247235 A and US 2003/0174055 A1 show a tensioning device and indicating devices for strap lashing. However, no specific indication is given of how the tightening of the strap is checked.

US 3 957 285 A and WO 00/66395 show different embodiments of existing tensioning devices.

The principal object of the present invention is thus with basic and cost effective means, produce a device that partly checks that sufficient tightening force is applied to the lashing strap, partly with a subsequent check during transport to clearly see whether the tightening force has reduced and by that be able to perform additional tightening in time.

The aforementioned object is achieved by means of a device in accordance with the present invention, which is essentially characterised in that, pairs of storage axles situated at mutual distance from each other are arranged to receive the ends of the aforementioned plates, and that single or packets with several bent plates are threaded on said storage axles with the ends of the single or packet plates held at a mutual distance from each other, seen along each storage axle's axial extension.

The invention is described below through a number of accounted operative examples, at which reference to the enclosed drawings are made, of which,
Fig. 1 shows a perspective view of an implementation of a tension indicator according to the invention,
Fig. 2 shows in an exploded view the component parts of the tension indicator in this design,
Fig. 3 shows a spring plate,
Fig. 4 shows the tension indicator according to Fig. 1 with lashing strap sewn on,
Fig. 5 shows how the spring plates, in the tension indicator according to Fig. 4, straighten out when the lashing strap is tensioned in the direction of the arrows,
Fig. 5A shows how the spring plates, according to Fig. 4, have completely straightened out at full load on the lashing strap,
Fig. 6 shows the tension indicator in accordance with Fig. 1 and 4 with straight reinforcement ends,
Fig. 7 shows a reinforcement end in accordance with Fig. 6 with rectangular holes,
Fig. 8 shows an alternative, reversed, application of the spring plates in accordance with Fig. 3,
Fig. 9 shows the tension indicator in accordance with Fig. 8 with the anchor in an attachment eye,
Fig. 10 shows an alternative implementation of the tension indicator in accordance with Fig. 8,
Fig. 10A shows a load take-up in perspective,
Fig. 11 shows an alternative implementation of the tension indicator in accordance with Fig. 6, with an alternative bend on the spring plates,
Fig. 12 shows the spring plates and reinforcement ends respectively in accordance with Fig. 11 in perspective,
Fig. 13 shows the tension indicator in accordance with Fig. 1, directly mounted in a so-called strap winch for tightening of the lashing strap,
Fig. 14 shows a tension indicator - strap winch-combination,
Fig. 15 shows a tension indicator - strap winch-combination, in accordance with Fig. 14, equipped with a middle section,
Fig. 16 shows the device in accordance with Fig. 15 with the strap tensioned,
Fig. 17 shows the device in accordance with Fig. 15 equipped with automatic tightening of the lashing strap,
Fig. 18 shows the device in accordance with Fig. 17 with a tensioned strap, and
Fig. 19 shows a similar device in accordance with Fig. 18, with a self-braking and load take-up gear for tightening and taking up of the load on the lashing strap.

A device 1 in accordance with the present invention, which is arranged to enable the visual inspection of the tightening force required when, for example, lashing goods with a lashing strap 2 of fabric or with another flexible lashing apparatus with the help of a mechanism 3 in the form of a tension indicator, formed by a number of thin and curved plates 4, 4A, 4B; 5, 5A, 5B which are arranged to show spring properties. The aforementioned plates 4-5B are joined with the aforementioned lashing strap 2 via appropriate fastenings 6, 7 and are arranged to straighten out when tightening of the lashing strap 2 with the required force F.

The aforementioned plates 4-5B are formed of a number of thin and heavily bent plates with spring properties that are interconnected with appropriate strap fastenings and are applied, for example, through sewing, in an appropriate position on the lashing strap 2, whereby the aforementioned spring plates 4-5B straighten out when the lashing strap 2 is tightened.

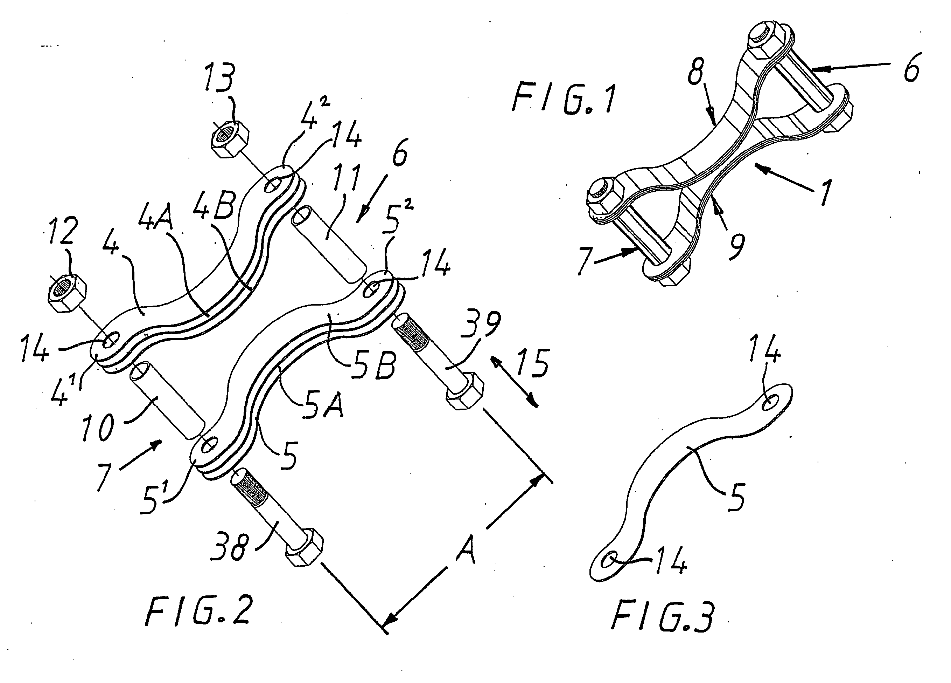

The number of plates can vary from a single plate up to a joint packet 8, 9 comprising of several separate plates. The aforementioned plates 4-5B are made of metal or plastic and preferably spring steel with holes 14 in the ends 4¹, 4², 5¹, 5². The aforementioned fastenings 6, 7 are formed by storage axles, 38, 39 arranged in pairs at a mutual distance from each other with the suitable sleeves 10, 11 sewn on. Bolts with locking screw-on nuts 12, 13 lock everything in position as shown in Fig. 1.

Single or packets with several bent plates 4, 5; 4-5B are threaded on the aforementioned storage axles 38, 39 with the ends 4¹-5² of single or packet plates held at a mutual distance A from each other seen along each storage axle's axial extension 15.

In that connection at least one end 2A, 2B of a lashing strap 2 is linked to the storage axle 8, 9 and sewn with thread on the associated lashing strap 2.

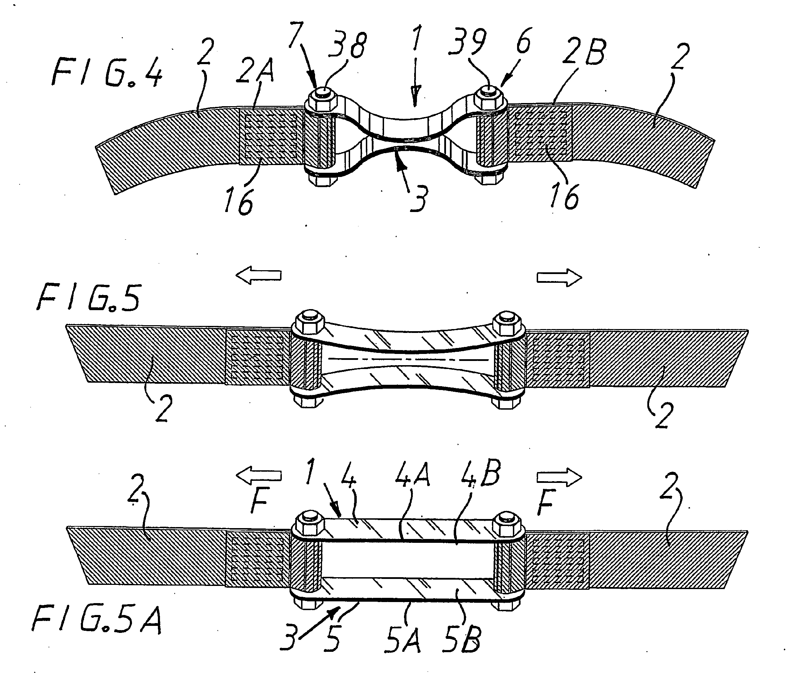

The drawing in Fig. 5 shows how the spring plates 4-5B, in the tension indicator from their normal position in an unloaded state shown in Fig. 4, straighten out with the tightening of lashing strap 2 in the directions of the arrows. In Fig. 5A it is shown how the spring plates 4-5B according to Fig. 4 completely straighten out with a full load F on the lashing strap 2. Accordingly, you can easily, visually assess whether the strap 2 is tightened with the correct force F.

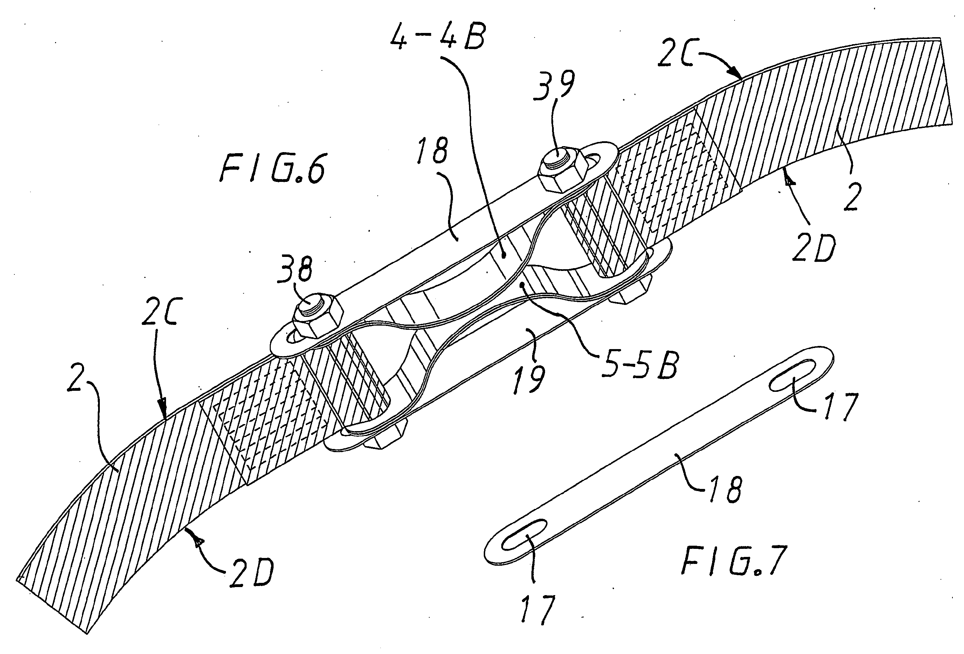

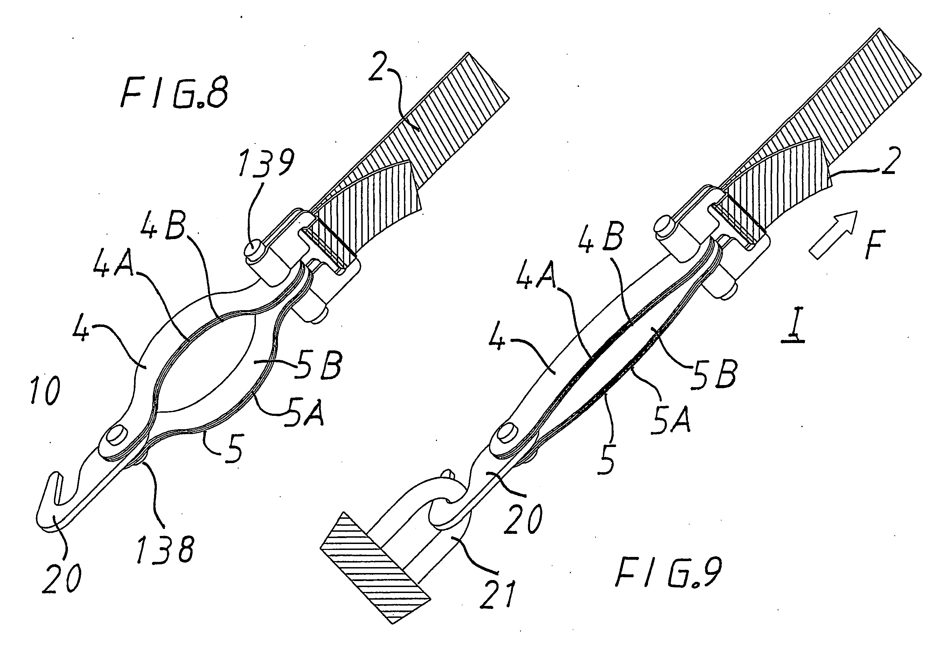

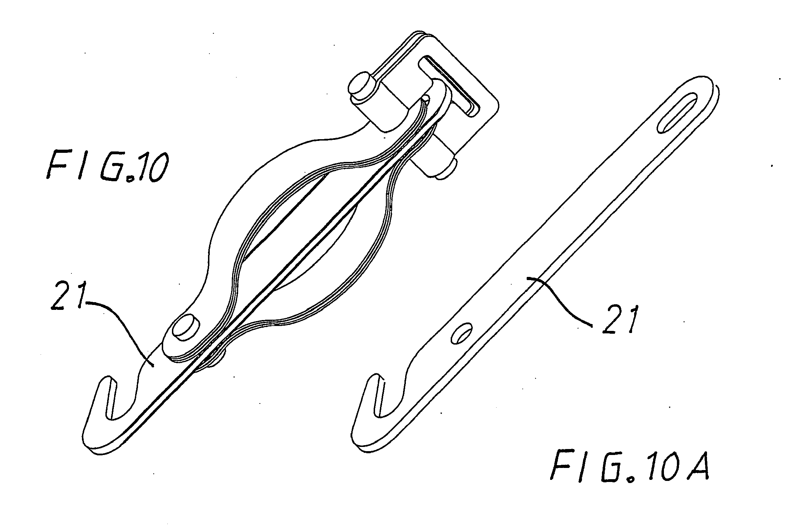

A slotted 17 side reinforcement end 18, which is interconnectable with the aforementioned transversal storage axles 38, 39, is arranged on at least one side edge 2C, 2D of the strap 2 to enable the take-up of a greater load than what the load indicating spring plates 4-5B are calculated to achieve. In fig. 6 it is shown how the strap's 2 both long sides 2C, 2D support the similar side reinforcement ends 18, 19. Fig. 8 shows an alternative, reversed application of the spring plates 4-5B, and an alternative application of the lashing strap 2, by additional tightening and respectively with an equipped anchorage hook 20 that is joined with one of the storage axles 138, 139. In fig. 9 it is shown how the hook 20 is anchored in an attachment eye 21 and the spring plates 4-4B; 5-5B are held in an assembled position I after tightening of the strap 2 with the required force F. A hook 21 can even form a combined hook and side reinforcement end, as for example, shown in Fig. 10-10A.

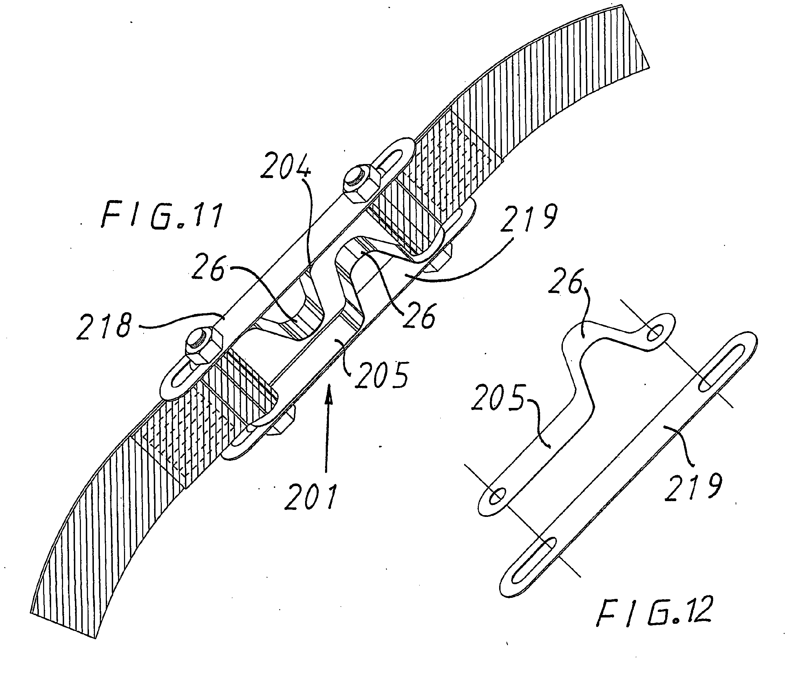

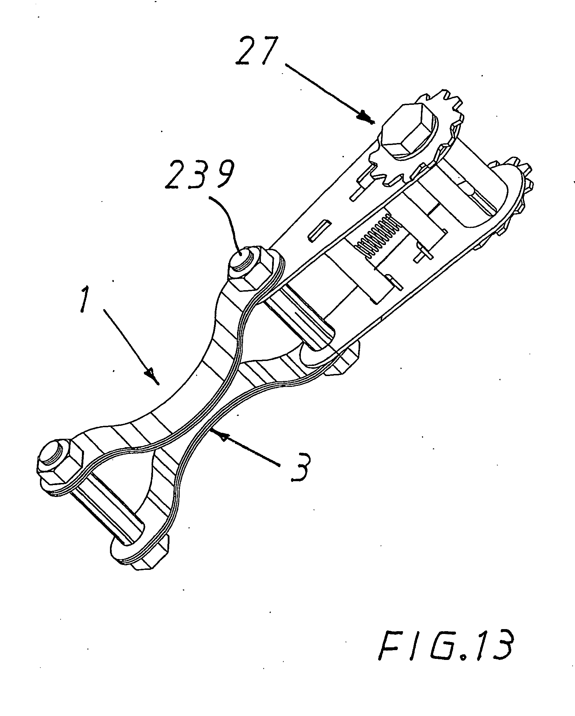

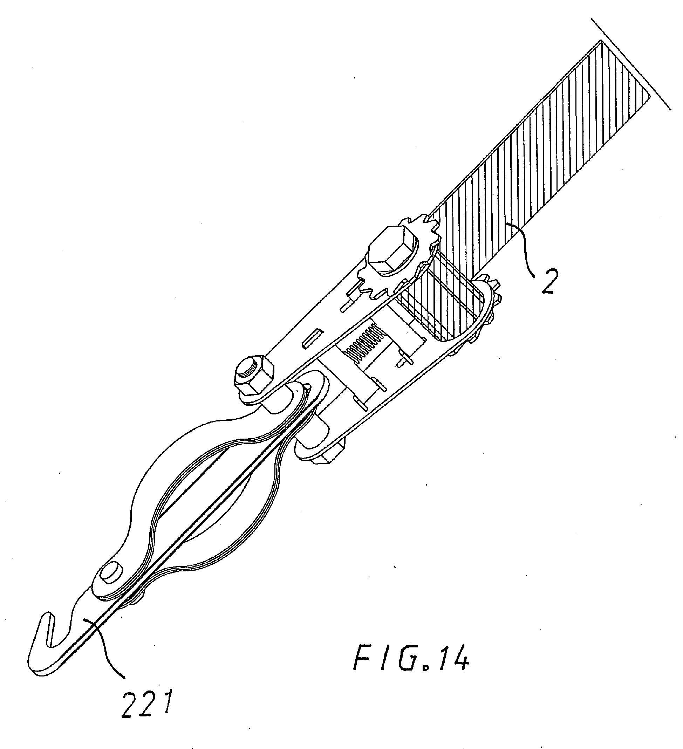

The tension indicator 201 can, as shown in Fig. 11-12 be designed with a length offset bending 26 of the spring plates 204, 205 with the purpose of achieving a longer spring movement. Thereby even the side reinforcement ends 218, 219 can be arranged. A manual 27 or 28 motorised strap winch can be connected with a strap 2 and with an aforementioned storage axle 239 arranged between the same. Fig. 13 shows the tension indicator directly mounted in a strap winch for tightening the lashing strap 2 while in Fig. 14 the tension indicator is equipped with a hook with reinforcement 221.

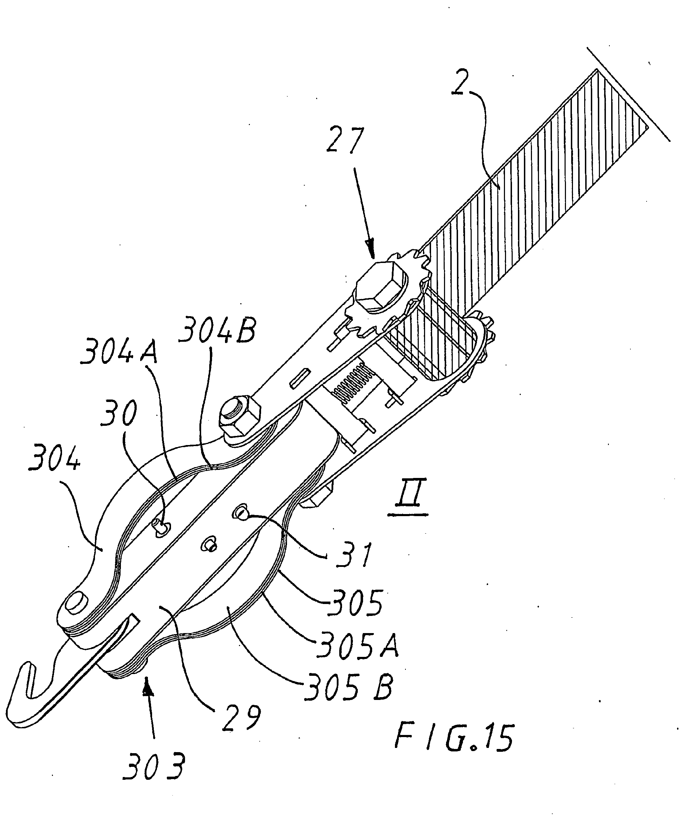

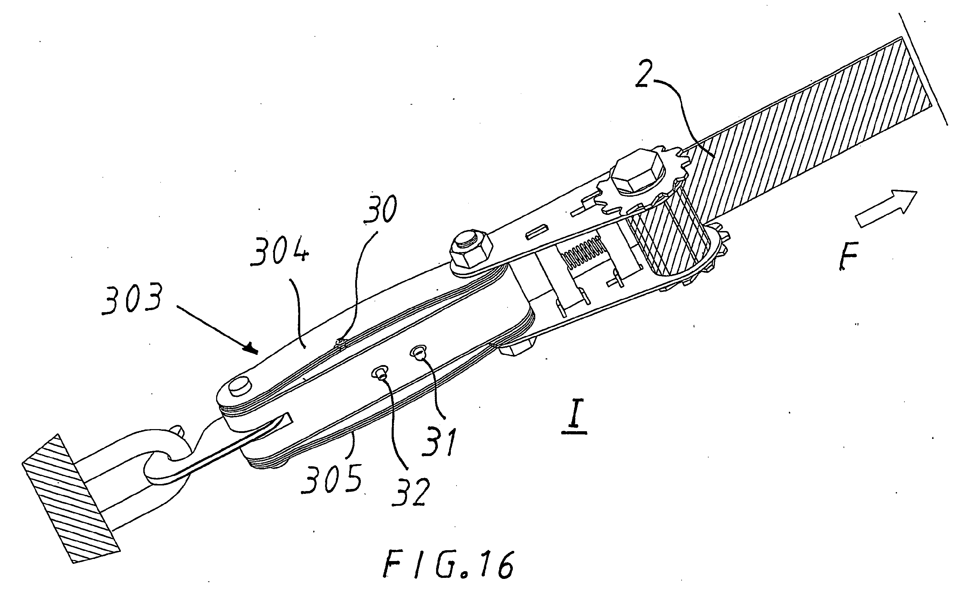

Fig. 15-19 shows examples of a tension indicator combined with an electrically controllable middle section 29 comprising, among others, a battery, an electrical 30 connector, a light emitting diode 31 or a signal sender for remote transfer of information to the user, for example, to the dashboard in the cab of a truck. It can, for example, be formed by a displaying controllable middle section 29 with an indicator 31 which is arranged mounted between the plate packet 304, 304A, 304B; 305, 305A, 305B so that for example, a pushable, actuator button 30 is arranged to be pressed into a position when the aforementioned plate packet forming tension indicator 303 is in the loaded position I, which is shown in Fig. 16. When the load is reduced on the strap 2 for some reason, it is the intention of the invention that this slack on the strap 2 shall be possible to indicate to the vehicle driver without the need of having to climb up onto the load and trying all the lashing straps 2, but a signal is displayed to the driver that there is a problem in the form of tension indicator 303 and/or that a simple means of indication can be arranged in the driver's cab, for example, a lamp. The aforementioned lamp lights when the plate packet 304-305B is held in the deflected position II so that the actuation button 30 is permitted to release. With the help of an additional button 32 the function can be reset.

The aforementioned middle section can thus contain a wireless signal sender and that a receiver can also be arranged at a suitable distance that displays the means to permit the indication function of the aforementioned positions I respective II.

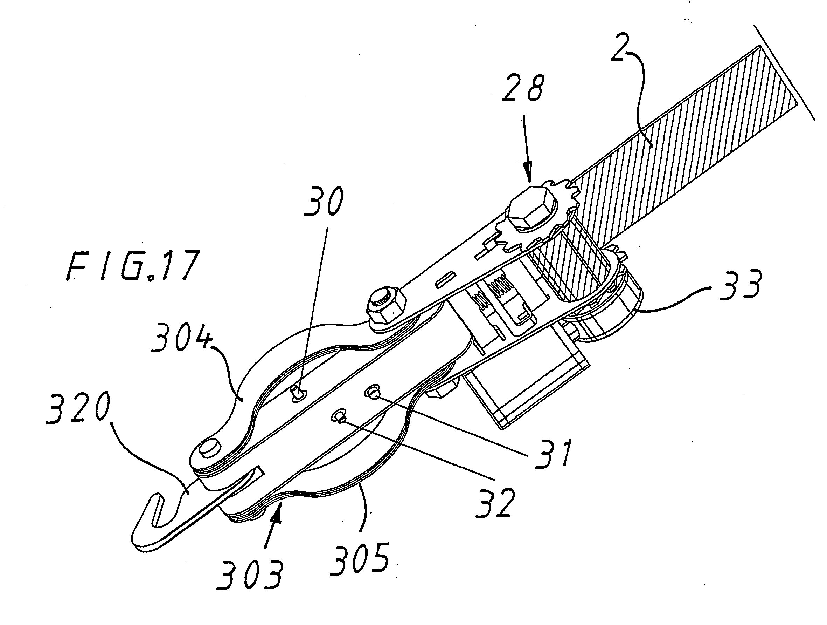

In Fig. 17 the device is shown according to Fig. 15 equipped with, for example, a gear motor 33 in order to achieve automatic tightening of the lashing strap 2 when a signal is obtained on the motor from the middle positioned tension indicator 303 between a hook 320 and the strap 2.

Tightening of this strap 1 is also arranged to enable continuous operations, whereby sensors can be arranged that detects the tightening force on the strap, and which stops tightening at a defined value.

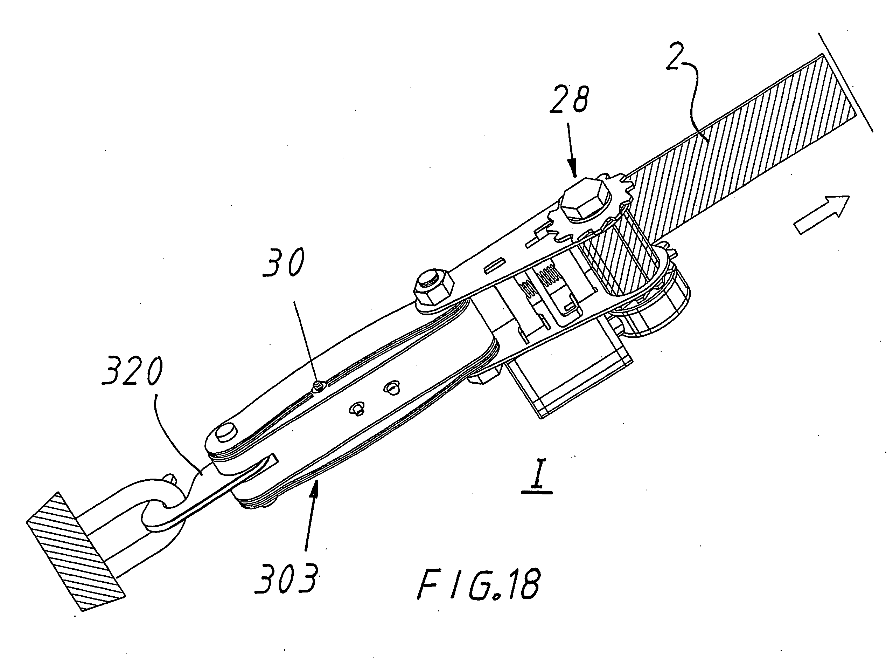

On the drawings in Fig. 18 it is shown how the middle positioned tension indicator 303, with the strap 2 tensioned in position I, achieves depression of the switch 30.

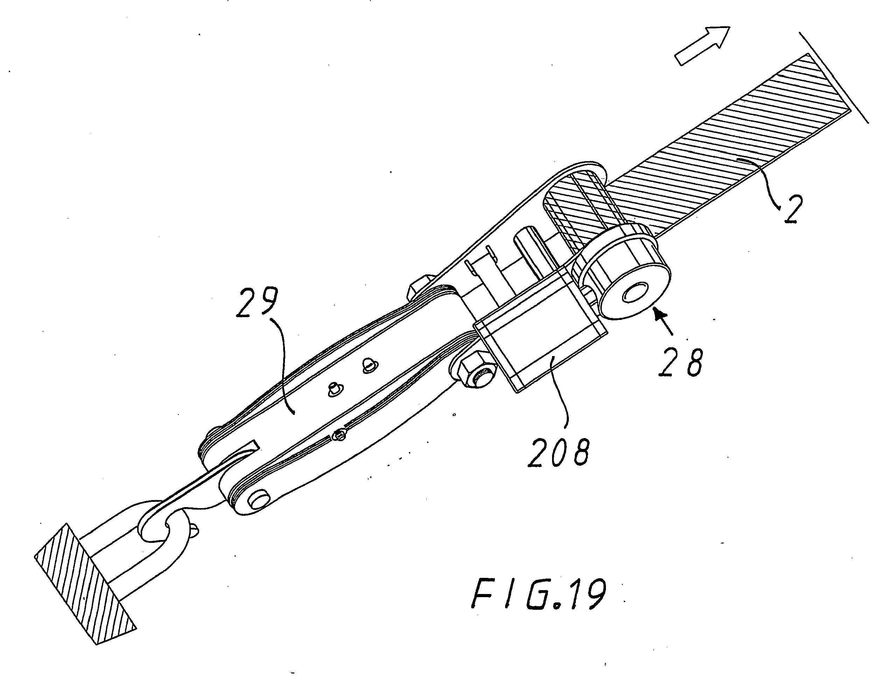

Fig. 19 finally shows a similar device as that in Fig. 18, but with a self-braking and load take-up gear 208 on a motor 28 to achieve tightening and load take-up on the lashing strap 2.

The function of the invention has probably been understood from the above description and that shown on the drawings. However, the invention is naturally not limited to the above description and the designs shown on the enclosed drawings. Modifications are possible, especially with regard to the character of the different parts, or through the use of equivalent technology, without deviating from the restricted area for the invention, such as defined in the patent claims.

## Claims

1. Goods lashing device (1) to enable control of the tightening and that comprises a mechanism (3) consisting of a number of thin and bent plates (4, 4A, 4B; 5, 5A, 5B), that exhibit spring properties and that are joined to the lashing strap (2), for tightening of the aforementioned lashing strap (2) or other flexible lashing apparatus, and that the aforementioned plates are arranged to straighten out during the tightening of the lashing strap (2) with required force (F), **characterised in that,** pairs of storage axles (38, 39) situated at mutual distance (A) from each other are arranged to receive the ends (4¹, 4², 5¹, 5²) of the aforementioned plates (4-5B), and that a single or packets of several bent plates (4-5B) are threaded on the aforementioned storage axles (38, 39) with the ends (4¹-5²) of single or packet plates held at a mutual distance A from each other seen along each storage axle's (38, 39) axial extension (15).

2. Device according to claim 1, **characterised in that,** the aforementioned plates (4-5B) are heavily bent and are formed of a single plate or a common packet (8, 9) with plates.

3. Device according to any of the claims 1-2, **characterised in that,** the aforementioned plates (4-5B) are formed of plastic.

4. Device according to any of the claims 1-2, **characterised in that,** the aforementioned plates (4-5B) are formed of metal, preferably spring steel.

5. Device according to any of the claims 1-4, **characterised in that,** at least one end of the lashing strap (2) is linked to a storage axle (38, 39) and is sewn on to the associated lashing strap (2).

6. Device according to any of the claims 1-5, **characterised in that,** a slotted (17) side reinforcement end (18, 19), which is interconnectable with the aforementioned transversal storage axles (38, 39), are arranged along at least one side edge (2C, 2D) of the strap (2).

7. Device according to any of the claims 1-5, **characterised in that,** a hook (20) is connected to at least one storage axle (138, 139).

8. Device according to any of the patent claims 1-7, **characterised in that,** a manual or motorised strap winch (27 respective 28) is connected with a strap (2) and an aforementioned storage axle (239), between the same.

9. Device according to claim 8, **characterised in that,** the aforementioned motorised strap winch (28) is arranged to accomplish automatic strap tightening, either continuously or intermittently.

10. Device according to any of the patent claims 1-9, **characterised in that,** a displaying controllable middle section (29) with signal indicator (31) is arranged between the plate packet (304-305B) and is controllable by the aforementioned plates (304, 304A, 304B; 305, 305A, 305B) to bring about visual indication by means of a lamp (31) when the plates are held in a remote position (II) at a distance from an actuator button (30).

11. Device according to claim 10, **characterised in that,** the middle section (29) contains a wireless signal sensor and that also arranged at a suitable distance is a mounted receiver that displays means to permit an indication function for the plate positions (I respective II).

## Patentansprüche

1. Vorrichtung (1) zum Festzurren von Gütern, um eine Steuerung des Festziehens zu ermöglichen, und die einen Mechanismus (3) umfasst, der aus einer Anzahl dünner und gebogener Platten (4, 4A, 4B; 5, 5A, 5B) besteht, die Federeigenschaften aufweisen und die mit dem Festzurrgurt (2) zum Festziehen des Festzurrgurts (2) oder einer anderen flexiblen Festzurrvorrichtung verbunden sind, und dass die Platten derart angeordnet sind, dass sie sich beim Festziehen des Festzurrgurts (2) mit der erforderlichen Kraft (F) ausstrecken, **dadurch gekennzeichnet, dass** Paare von Lagerachsen (38, 39), die sich unter einer gegenseitigen Distanz (A) voneinander befinden, angeordnet sind, um die Enden (4¹, 4², 5¹, 5²) der Platten (4 - 5B) aufzunehmen, und dass eine einzelne oder Pakete mehrerer gebogener Platten (4 - 5B) an die Lagerachsen (38, 39) geschraubt sind, wobei die Enden (4¹- 5²) der einzelnen oder des Pakets von Platten in einer gegenseitigen Distanz (A) voneinander, betrachtet entlang der axialen Ausdehnung (15) jeder Lagerachse (38, 39), gehalten sind.

2. Vorrichtung nach Anspruch 1, **dadurch gekennzeichnet, dass** die Platten (4 - 5B) stark gebogen und aus einer einzelnen Platte oder einem gemeinsamen Paket (8, 9) mit Platten geformt sind.

3. Vorrichtung nach einem der Ansprüche 1 bis 2, **dadurch gekennzeichnet, dass** die Platten (4 - 5B) aus Kunststoff geformt sind.

4. Vorrichtung nach einem der Ansprüche 1 bis 2, **dadurch gekennzeichnet, dass** die Platten (4 - 5B) aus Metall, bevorzugt Federstahl, geformt sind.

5. Vorrichtung nach einem der Ansprüche 1 bis 4, **dadurch gekennzeichnet, dass** zumindest ein Ende des Festzurrgurts (2) mit einer Lagerachse (38, 39) verbunden und an den zugeordneten Festzurrgurt (2) genäht ist.

6. Vorrichtung nach einem der Ansprüche 1 bis 5, **dadurch gekennzeichnet, dass** ein geschlitztes (17) Seitenverstärkungsende (18, 19), das mit den quer verlaufenden Lagerachsen (38, 39) verbindbar ist, entlang zumindest eines Seitenrandes (2C, 2D) des Gurts (2) angeordnet ist.

7. Vorrichtung nach einem der Ansprüche 1 bis 5, **dadurch gekennzeichnet, dass** ein Haken (20) mit zumindest einer Lagerachse (138, 139) verbunden ist.

8. Vorrichtung nach einem der Ansprüche 1 bis 7, **dadurch gekennzeichnet, dass** eine manuelle oder motorisierte Gurtwinde (27 bzw. 28) mit einem Gurt (2) und einer Lagerachse (239) zwischen diesen verbunden ist.

9. Vorrichtung nach Anspruch 8, **dadurch gekennzeichnet, dass** die motorisierte Gurtwinde (28) derart angeordnet ist, um ein automatisches Festziehen des Gurts entweder kontinuierlich oder diskontinuierlich zu erreichen.

10. Vorrichtung nach einem der Ansprüche 1 bis 9, **dadurch gekennzeichnet, dass** ein steuerbarer Anzeigemittelabschnitt (29) mit Signalanzeiger (31) zwischen dem Plattenpaket (304 - 305B) angeordnet und durch die Platten (304, 304A, 304B; 305, 305A, 305B) steuerbar ist, um eine visuelle Anzeige mittels einer Lampe (31) zu bewirken, wenn die Platten unter einer Distanz von einem Aktuatorknopf (30) in einer entfernten Position (II) gehalten sind.

11. Vorrichtung nach Anspruch 10, **dadurch gekennzeichnet, dass** der Mittelabschnitt (29) einen drahtlosen Signalsensor enthält, und dass ebenfalls unter einer geeigneten Distanz ein montierter Empfänger angeordnet ist, der Mittel anzeigt, um eine Anzeigefunktion für die Plattenpositionen (I bzw. II) zuzulassen.

## Revendications

1. Dispositif d'arrimage de marchandises (1) permettant de contrôler la tension, qui comprend un mécanisme (3) se composant d'un certain nombre de plaques minces et incurvées (4, 4A, 4B ; 5, 5A, 5B) présentant des caractéristiques d'élasticité et qui sont reliées à une sangle d'arrimage (2) pour la mise en tension de la sangle d'arrimage susmentionnée (2) ou de tout autre dispositif d'arrimage flexible, et dans lequel les plaques susmentionnées sont prévues pour se redresser au cours du serrage de la sangle d'arrimage (2) avec la force requise (F), **caractérisé en ce qu'**une paire d'axes de stockage (38, 39) situés à une distance mutuelle (A) l'un de l'autre sont prévus pour recevoir les extrémités (4¹, 4² , 5¹, 5²) des plaques susmentionnées (4 à 5B), et **en ce qu'**une seule ou des groupes de plusieurs plaques incurvées (4 à 5B) sont enfilées sur les axes de stockage (38, 39) susmentionnés avec les extrémités (4¹ à 5²) de la seule ou des groupes de plusieurs plaques incurvées sont maintenues à une distance mutuelle (A) l'une de l'autre vues le long de la prolongation axiale (15) de chaque axe de stockage (38, 39).

2. Dispositif selon la revendication 1, **caractérisé en ce que** les plaques susmentionnées (4 à 5B) sont fortement incurvées et sont constituées d'une seule plaque ou d'un groupe commun de plaques (8, 9).

3. Dispositif selon l'une quelconque des revendications 1 à 2, **caractérisé en ce que** les plaques susmentionnées (4 à 5B) sont réalisées en matière plastique.

4. Dispositif selon l'une quelconque des revendications 1 à 2, **caractérisé en ce que** les plaques susmentionnées (4 à 5B) sont réalisées en métal, de préférence en acier à caractéristique élastique.

5. Dispositif selon l'une quelconque des revendications 1 à 4, **caractérisé en ce qu'**au moins une extrémité de la sangle d'arrimage (2) est reliée à un axe de stockage (38, 39) et **en ce qu'**elle est cousue sur la sangle d'arrimage associée (2).

6. Dispositif selon l'une quelconque des revendications 1 à 5, **caractérisé en ce que** des extrémités latérales de renfort (18, 19) présentant des fentes (17) qui peuvent être montées sur les axes de stockage transversaux susmentionnés (38, 39), sont prévues le long d'au moins un bord latéral (2C, 2D) de la sangle (2).

7. Dispositif selon l'une quelconque des revendications 1 à 5, **caractérisé en ce qu'**un crochet (20) est relié à au moins un axe de stockage (138, 139).

8. Dispositif selon l'une quelconque des revendications 1 à 7, **caractérisé en ce qu'**un treuil de sangle manuel ou motorisé (respectivement 27 ou 28) est relié à une sangle (2) et à un axe de stockage susmentionné (239), entre ces derniers.

9. Dispositif selon la revendication 8, **caractérisée en ce que** le treuil de sangle motorisé susmentionné (28) est prévu pour effectuer un serrage automatique de la sangle, de manière continue ou par intermittence.

10. Dispositif selon l'une quelconque des revendications 1 à 9, **caractérisé en ce qu'**une section centrale d'affichage commandée (29) avec son indicateur de signal (31) est logée entre le groupe de plaques (304 à 305B) et peut être commandée par les plaques susmentionnées (304, 304A, 304B ; 305, 305A, 305B) pour donner une indication visuelle à l'aide d'une lampe (31) lorsque les plaques sont maintenues dans une position éloignée (II) à une certaine distance d'un bouton d'actionnement (30).

11. Dispositif selon la revendication 10, **caractérisée en ce que** la section centrale (29) comporte un capteur de signal sans fil et **en ce qu'**un récepteur fixé qui affiche des moyens permettant d'indiquer les positions (respectivement I et II) de la plaque est également prévu à une distance appropriée.
